# EUROPEAN PATENT APPLICATION

(11) **EP 3 621 006 A1**
(43) Date of publication of application: **11.03.2020**
(21) Application number: 19194874.4
(22) Date of filing: 02.09.2019
(51) Int. Cl.: G06Q 10/06, G06Q 10/10

(54) **A METHOD AND APPARATUS FOR EXTENDED WORKFORCE MANAGEMENT**

(30) Priority: 07.09.2018 US 201816125262; 07.09.2018 US 201816125071
(71) Applicant: Mile Out, Inc, Morgantown, WV 26505 (US)
(72) Inventor: ESPOSITO, Patrick R., Morgantown, WV West Virginia 26505 (US); WISE, Mark T., Morgantown, WV West Virginia 26508 (US); CECIL, Kelly D., Morgantown, WV West Virginia 26508 (US); WESTBROOK, Aaron M., Morgantown, WV West Virginia 26508 (US); MARKLE, Jason A., Morgantown, WV West Virginia 26505 (US); DAVIS, Joshua A., Morgantown, WV West Virginia 26505 (US); MARTIN, Barry R., Morgantown, WV West Virginia 26508 (US); WILHELM, Jay P., Athens, OH Ohio 45701 (US)
(74) Representative: Ruuskanen, Juha-Pekka

(57) **Abstract**

Various embodiments relate to a method for extended workforce management, the method including the steps of identifying, by a provider of services, of an acquirer of services, forming a contract between the provider of services and the acquirer of services wherein the acquirer of services and the provider of service are individuals, with a user profile, or organizations which include a plurality of users with user profiles and wherein the user profiles for the user is associated with multiple organizations.

## Description

This disclosure relates generally to extended workforce management activities, and more specifically, but not exclusively, management of freelance workers and outside contractors by allowing for sequential extended workforce engagement, user profile ratings, organization profile aggregation from organization personnel user profiles, deliverable management and invoice management.

On an increasing basis, organizations are shifting their workforce engagement from employees to a new extended workforce that many describe as the "gig economy," the "freelance age," or the era of "just in time work." This extended workforce includes individuals, for example, freelancers and outside contractors and third-party organizations, for example, vendors, outsourcing firms and others.

Recent estimates indicate that over a third of workforce in the U.S., or 57 million workers are currently operating within an extended workforce and contribute approximately $1.4 trillion of work to the U.S. economy.

One of the reasons that organizations are shifting their workforce engagement from employees to an extended workforce is due to difficulties with filling and sustaining full-time employment positions.

Within a decade, many labor economists believe freelance workers will outnumber full time workers.

While traditional vendor management systems and emerging freelance marketplaces may address extended workforce management issues, these software platforms do not address the difficulties that businesses and workers face in an increasingly contract-driven work engagement due to their lack of functionality.

The invention is defined by the appended claims.

A brief summary of various embodiments is presented below. Embodiments address a method and apparatus for extended workforce management.

A brief summary of various example embodiments is presented. Some simplifications and omissions may be made in the following summary, which is intended to highlight and introduce some aspects of the various example embodiments, but not to limit the scope of the invention.

Detailed descriptions of example embodiments adequate to allow those of ordinary skill in the art to make and use the inventive concepts will follow in later sections.

Various embodiments relate to a method for extended workforce management, the method including the steps of identifying, by a provider of services, of an acquirer of services, forming a contract between the provider of services and the acquirer of services; wherein the acquirer of services and the provider of service are individuals, with a user profile, or organizations which include a plurality of users with user profiles and the user profiles for the user is associated with multiple organizations.

In an embodiment of the present disclosure, a user profile includes skills and ratings for a user and the user profile is removed from an associated organizational profile when the user leaves the organization.

In an embodiment of the present disclosure, the method for extended workforce management further including the steps of receiving from the provider of service, a proposal, by determining whether prior activity for the provider of service is available, determining whether the provider of service uses the prior activity for the proposal, allowing the provider of service to select which prior activity to use in the proposal, creating and reviewing, by the provider of service, the proposal and transmitting the proposal to the acquirer of services.

In an embodiment of the present disclosure, the method for extended workforce management further including the steps of receiving a selection from the acquirer of services, of a proposal.

In an embodiment of the present disclosure, the method for extended workforce management further including the steps of receiving a formation of the contract between the acquirer of services and the provider of service.

In an embodiment of the present disclosure, the method for extended workforce management, the method further including the steps of receiving a formation of the contract between the acquirer of services and of the provider of service, by determining whether prior activity for the acquirer of service is available, determining whether the acquirer of service uses the prior activity for the contract, allowing the acquirer of service to select which prior activity to use in the contract, creating and reviewing, by the acquirer of service, the contract and transmitting the contract to the provider of service.

In an embodiment of the present disclosure, the method for extended workforce management further including the steps of receiving a formation of the contract between the acquirer of services and of the provider of service, by determining whether prior activity for the provider of service is available, determining whether the provider of service uses the prior activity for the contract, allowing the provider of service to select which prior activity to use in the contract, creating and reviewing, by the provider of service, the contract and transmitting the contract to the acquirer of services.

In an embodiment of the present disclosure, the method for extended workforce management further including the steps of receiving a determination from the acquirer of services, of whether a deliverable meets the requirements of the contract.

In an embodiment of the present disclosure, the method for extended workforce management further including the steps of receiving a determination from the acquirer of services, of whether a deliverable meets the requirements of the contract, by determining whether the deliverable is available and notifying the acquirer of services that the deliverable is available, determining whether the deliverable requires a user assessment and notifying the users to review the deliverable, determining whether the deliverable meets the requirements of the contract and marking the deliverable as fulfilled.

In an embodiment of the present disclosure, the method for extended workforce management further including the steps of receiving a determination from the acquirer of services, of whether a deliverable meets the requirements of the contract, by receiving a determination of whether the deliverable meets the requirements of the contract, rejecting the deliverable and requiring resubmission of the deliverable.

In an embodiment of the present disclosure, the method for extended workforce management further including the steps of receiving a determination from the acquirer of services, of whether an invoice meets the requirements of the contract, by determining whether the invoice is available and notifying the acquirer of services that the invoice is available, determining whether the invoice requires a user assessment and notifying the users to review the invoice, determining whether the invoice meets the requirements of the contract and marking the invoice as ready for payment.

In an embodiment of the present disclosure, the method for extended workforce management further including the steps of receiving a determination of whether the invoice meets the requirements of the contract, rejecting the invoice and requiring resubmission of the invoice.

In an embodiment of the present disclosure, the method for extended workforce management further including the steps of transmitting, by the acquirer of services, payment for the invoice to the provider of services.

In an embodiment of the present disclosure, the method for extended workforce management further including the steps of determining whether collaborative project ratings for the contract exist for the acquirer of services and the provider of service, querying and assessing the collaborative project ratings for the contract and integrating the collaborative project ratings into the user profiles for the acquirer of services and the provider of service.

In an embodiment of the present disclosure, the method for extended workforce management further comprising the steps of determining whether past contract activities exist for the acquirer of services and the provider of service, querying and assessing the past contract activities for being on-time, on-budget and on-point for the deliverable and integrating the past contract activities into the user profiles for the acquirer of services and the provider of service.

Various embodiments relate to an apparatus for extended workforce management, the apparatus including a memory and a processor configured to send, by a provider of services, a proposal to an acquirer of services, select, by the acquirer of services, the proposal, form a contract between the provider of services and the acquirer of services based on the proposal; wherein the acquirer of services and the provider of service are individuals, with a user profile, or organizations, which include a user or a plurality of users with user profiles and the user profile of the user is associated with multiple organizations.

In an embodiment of the present disclosure, a user profile includes skills and ratings for a user and the user profile is removed from an associated organizational profile when the user leaves the organization.

In an embodiment of the present disclosure, the apparatus for extended workforce management further configured to receive from the provider of service, a proposal, by determining whether prior activity for the provider of service is available, determining whether the provider of service uses the prior activity for the proposal, allowing the provider of service to select which prior activity to use in the proposal, creating and reviewing, by the provider of service, the proposal and transmitting the proposal to the acquirer of services.

In an embodiment of the present disclosure, the apparatus for extended workforce management further including the steps of receiving a selection from the acquirer of services, of a proposal.

In an embodiment of the present disclosure, the apparatus for extended workforce management further configured to receive a formation of the contract between the acquirer of services and the provider of service

In an embodiment of the present disclosure, the apparatus for extended workforce management further configured to receive a formation of the contract between the acquirer of services and the provider of service, by determining whether prior activity for the acquirer of service is available, determining whether the acquirer of service uses the prior activity for the contract, allowing the acquirer of service to select which prior activity to use in the contract, creating and reviewing, by the acquirer of service, the contract and transmitting the contract to the provider of services.

In an embodiment of the present disclosure, the apparatus for extended workforce management further configured to receive a formation of the contract between the acquirer of services and the provider of service, by determining whether prior activity for the provider of service is available, determining whether the provider of service uses the prior activity for the contract, allowing the provider of service to select which prior activity to use in the contract, creating and reviewing, by the provider of service, the contract and transmitting the contract to the acquirer of services.

In an embodiment of the present disclosure, the apparatus for extended workforce management further configured to receive a determination from the acquirer of services, of whether a deliverable meets the requirements of the contract, by determining whether the deliverable is available and notifying the acquirer of services that the deliverable is available, determining whether the deliverable requires a user assessment and notifying the users to review the deliverable, determining whether the deliverable meets the requirements of the contract and marking the deliverable as fulfilled.

In an embodiment of the present disclosure, the apparatus for extended workforce management further configured to receive a determination of whether the deliverable meets the requirements of the contract, rejecting the deliverable and requiring resubmission of the deliverable.

In an embodiment of the present disclosure, the apparatus for extended workforce management further configured to receive a determination from the acquirer of services, of whether an invoice meets the requirements of the contract, by determining whether the invoice is available and notifying the acquirer of services that the invoice is available, determining whether the invoice requires a user assessment and notifying the users to review the invoice, determining whether the invoice meets the requirements of the contract and marking the invoice as ready for payment.

In an embodiment of the present disclosure, the apparatus for extended workforce management further configured to receive a determination of whether the invoice meets the requirements of the contract, rejecting the invoice and requiring resubmission of the invoice.

In an embodiment of the present disclosure, the apparatus for extended workforce management further configured to transmit, by the acquirer of services, payment for the invoice to the provider of services.

In an embodiment of the present disclosure, the apparatus for extended workforce management further configured to determine whether collaborative project ratings for the contract exist for the acquirer of services and the provider of service, query and assessing the collaborative project ratings for the contract and integrate the collaborative project ratings into the user profiles for the acquirer of services and the provider of service.

In an embodiment of the present disclosure, the apparatus for extended workforce management further configured to determine whether past contract activities exist for the acquirer of services and the provider of service, query and assessing the past contract activities for being on-time, on-budget and on-point for the deliverable and integrate the past contract activities into the user profiles for the acquirer of services and the provider of service.

The accompanying figures, where like reference numerals refer to identical or functionally similar elements throughout the separate views, together with the detailed description below, are incorporated in and form part of the specification, and serve to further illustrate example embodiments of concepts found in the claims and explain various principles and advantages of those embodiments.

These and other more detailed and specific features are more fully disclosed in the following specification, reference being had to the accompanying drawings, in which:
FIG. 1 illustrates a block diagram of an extended workforce management system and process of the current embodiment;
FIG. 2 illustrates a flow diagram for a user profile in the extended workforce management system and process of the current embodiment;
FIG. 3 illustrates a flow chart for the process of sequential extended workforce engagement of the current embodiment;
FIG. 4 illustrates a flow chart for the process of creating a user profile rating of the current embodiment;
FIG. 5 illustrates a flow chart for the process of organization profile aggregation from organization personnel user profiles of the current embodiment;
FIG. 6 illustrates a flow chart for the process of deliverable management of the current embodiment;
FIG. 7 illustrates a flow chart for the process of invoice management of the current embodiment;
FIG. 8 illustrates a block diagram for a user computing system of the current embodiment;
FIG. 9 illustrates a block diagram for a server computing system of the current embodiment; and
FIG. 10 illustrates a flow diagram for the steps of the extended workflow management system and process of the current embodiment.

It should be understood that the figures are merely schematic and are not drawn to scale. It should also be understood that the same reference numerals are used throughout the figures to indicate the same or similar parts.

The descriptions and drawings illustrate the principles of various example embodiments. It will thus be appreciated that those skilled in the art will be able to devise various arrangements that, although not explicitly described or shown herein, embody the principles of the invention and are included within its scope. Furthermore, all examples recited herein are principally intended expressly to be for pedagogical purposes to aid the reader in understanding the principles of the invention and the concepts contributed by the inventor to furthering the art and are to be construed as being without limitation to such specifically recited examples and conditions. Additionally, the term, "or," as used herein, refers to a non-exclusive or (i.e., and/or), unless otherwise indicated (e.g., "or else" or "or in the alternative"). Also, the various embodiments described herein are not necessarily mutually exclusive, as some embodiments can be combined with one or more other embodiments to form new embodiments. Descriptors such as "first," "second," "third," etc., are not meant to limit the order of elements discussed, are used to distinguish one element from the next, and are generally interchangeable.

The current embodiment is directed towards an apparatus, system, and method for extended workforce management activities that allow for management of different groups of workforce such as freelance workers and outside contractors by allowing for sequential extended workforce engagement, user profile ratings, organization profile aggregation from organization personnel user profiles, deliverable management, and invoice management.

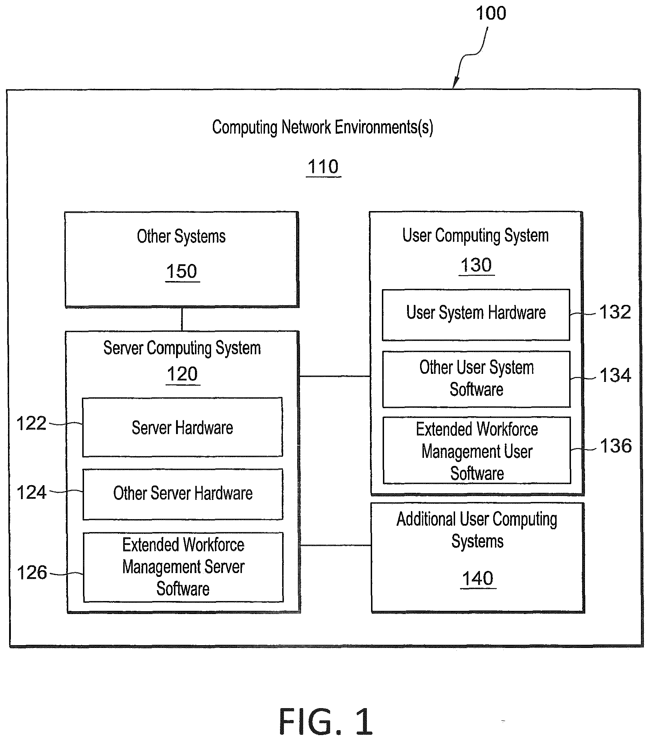

FIG. 1 illustrates a block diagram of an extended workforce management system and process 100 of the current embodiment.

The extended workforce management system and process 100 may include a computing network environment 110 which may include a server computing system 120, a user computing system 130, additional user computing systems 140 and other systems 150.

The server computing system 120 may include server hardware 122, other server software 124 and extended workforce management server software 126 which may be configured to execute the steps of the extended workforce management system and process.

The user computing system 130 may include user system hardware 132, other user system hardware 134 and extended workforce management user software 136 which may be configured to execute the steps of the extended workforce management system and process.

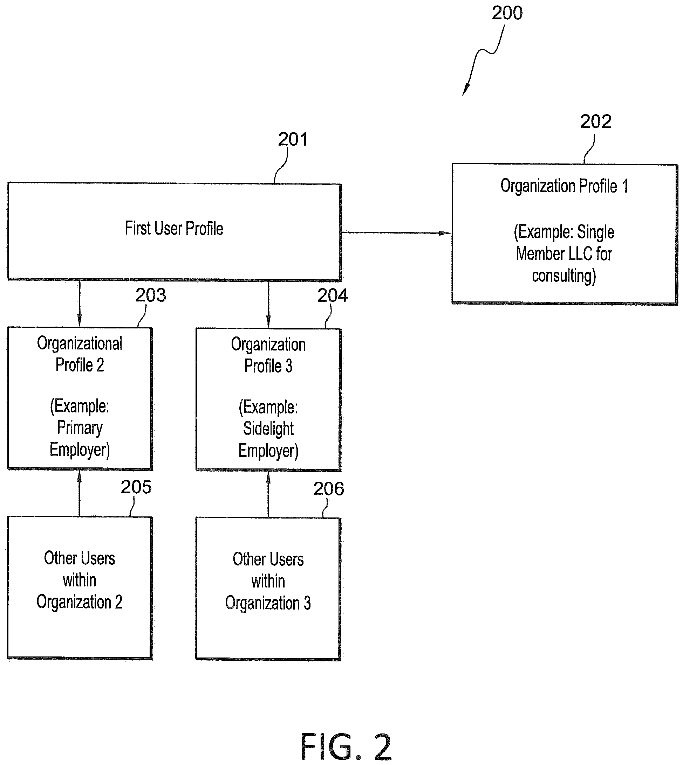

FIG. 2 illustrates a flow diagram 200 for a user profile in the extended workforce management system and process of the current embodiment.

The flow diagram includes a first user profile 201 which may be stored in several different organizations. For example, the first user profile 201 may be part of organization profile 202, which, for example, may be a single member limited liability company ("LLC") where the first user is the only member. The first user profile 201 may also be part of organization profile 203 which may be the first user's primary employer, which, for example, may be a corporation. The first user profile 201 may also be part of organization profile 204 which may be the first user's sidelight employer. The organization profile 203 may include other profiles 205 of other users who are part of the organization. The organization profile 204 may include other profiles 206 of users who are part of the organization. The first user may be part of each organization at the same time. The first user's profile may be included in the organization profile for each of these organizations. However, when the first user leaves an organization, the first user's profile 201 may also leave the organization. The user profile may include the skills and attributes that the user has and when that user leaves the organization, the skills and attributes also leave the organization, if no other user within the organization has these skills and attributes and the organization can no longer rely upon those skills and attributes.

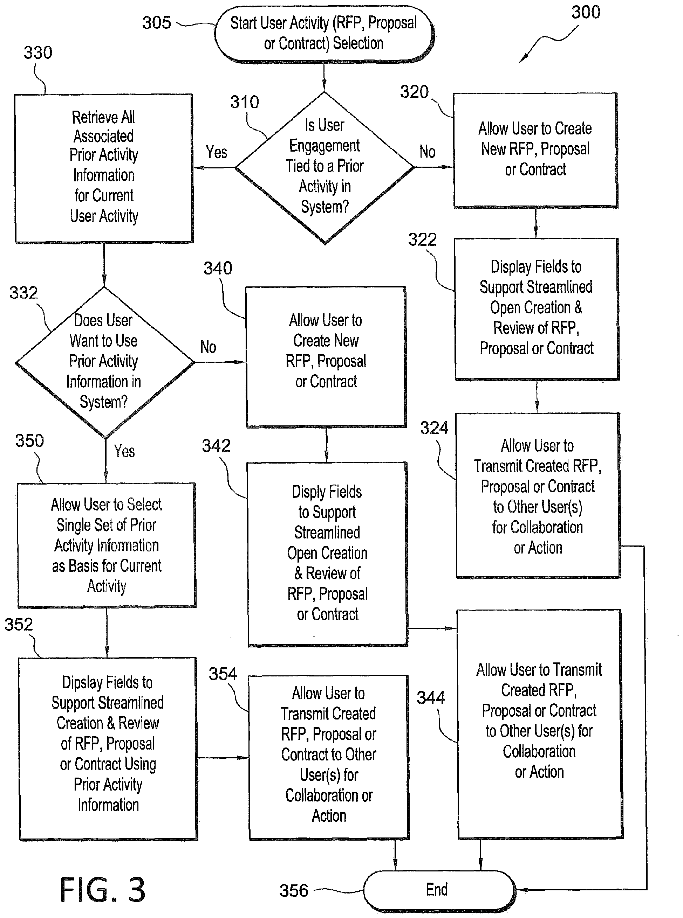

FIG. 3 illustrates a flow chart for the process of sequential extended workforce engagement 300 of the current embodiment.

The process of sequential extended workforce engagement 300 may be applied to a user activity 305 which may include a Request for Proposal or other request ("RFP"), a proposal in response to an RFP, or a contract in response to an accepted proposal.

The process 300 proceeds to step 310 which determines whether the user activity is tied to a prior activity in the system. If yes, the process 300 proceeds to step 330 which retrieves all associated prior activity information in the system for the current user activity. Prior activity may be any activity that the user has engaged in prior to the current activity for which the user may want to incorporate existing information into the current activity. For example, if the user had created an RFP prior to the current one, the user may want to use information from that previous RFP for the current one.

The process 300 then proceeds from step 330 to step 332 which determines whether the user wants to use the associated prior activity information in the system for the current user activity. If yes, the process 300 proceeds to step 350 which allows the user to select a single set of prior activity as the basis for the current user activity. The process 300 then proceeds to step 352 which displays fields to support streamlined creation and review of RFP, proposal or contract using prior activity information. The process 300 then proceeds to step 354 which allows the user to transmit the created RFP, proposal, or contract to other users for collaboration or action. The process 300 then proceeds to end at step 356. If the user decides to use the prior activity, then the retrieval and incorporation process may be simplified.

Alternatively, the user may decide not to use the prior activity, where the process 300 proceeds from step 332 which determines that the user does not want to use the associated prior activity information in the system for current user activity. The process 300 proceeds to step 340 which allows the user to create a new RFP, proposal or contract. The process 300 then proceeds to step 342 which displays fields to support streamlined open creation and review of the RFP, proposal or contract. The process 300 then proceeds to step 344 which allows the user to transmit the created RFP, proposal or contract to other users for collaboration or action. The process 300 then proceeds to end at step 356.

At step 310 when the process 300 determines that the user activity is not tied to a prior activity in the system, the process 300 proceeds to step 320 which allows the user to create an RFP, proposal or contract. The process 300 then proceeds to step 322 which displays fields to support streamlined open creation and review of the RFP, proposal or contract. The process 300 then proceeds to step 324 which allows the user to transmit the RFP, proposal or contract to other users for collaboration or action. The process 300 then proceeds to end at step 356.

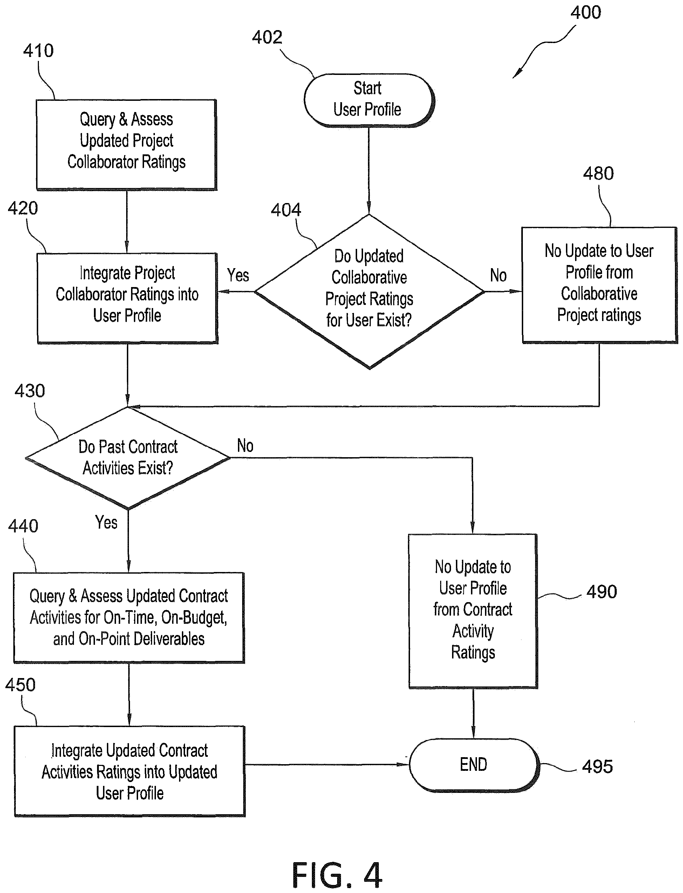

FIG. 4 illustrates a flow chart for the process 400 of creating a user profile rating of the current embodiment.

The process 400 begins at step 402 and proceeds to step 404 to determine whether updated collaborative project ratings for the user exist. If yes, the process 400 proceeds to step 410 which queries and assesses the updated project collaborator ratings. The process 400 then proceeds to step 420 which integrates the project collaborator ratings into the user profile. For example, project ratings may be ratings which either party gives to the other for their performance on the contract.

At step 404 when the process 400 determines that updated collaborative project ratings for the user does not exist, the process 400 proceeds to step 480 where there is no need to update the user profile from the collaborative project ratings. The process 400 then proceeds to step 430.

Step 430 in process 400 determines whether past contract activities exist. If yes, the process 400 proceeds to step 440 which queries and assesses the updated contract activities for on-time, on-budget and on-point deliverables. Then process 400 then proceeds to step 450 which integrates updated contract activities ratings into the updated user profile. The process 400 then proceeds to end at step 495. For example, contract activities such as being on-time, on-budget and on-point regarding deliverables may be contract activities which a party may give to the other for their performance on the contract.

At step 430 when the process 400 determines that past contract activities do not exist, the process 400 proceeds to step 490 where there is no need to update user profile from contract activity ratings. The process 400 then proceeds to end at step 495.

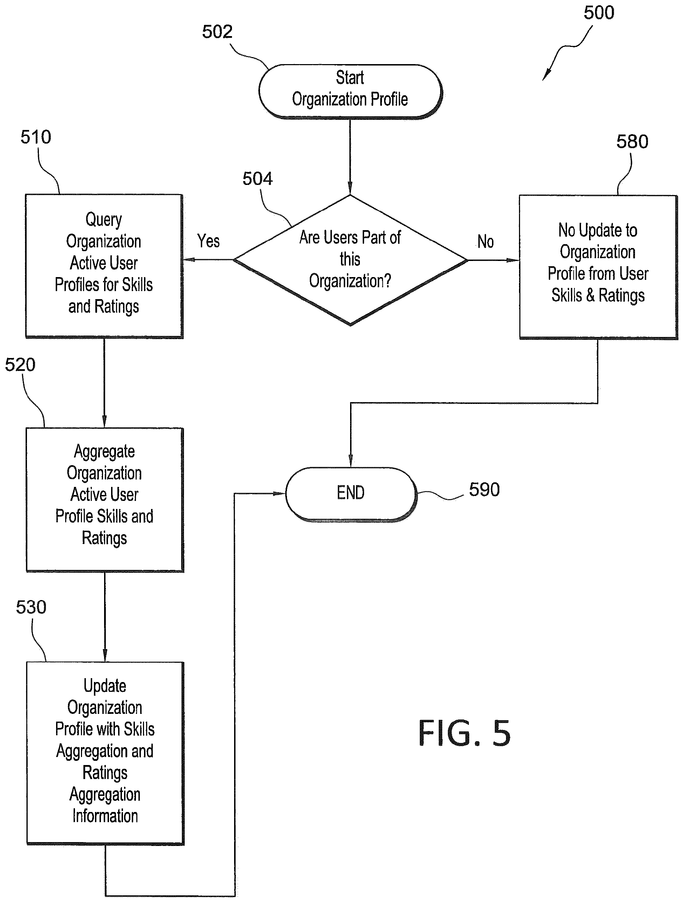

FIG. 5 illustrates a flow chart for the process 500 of organization profile aggregation from organization personnel user profiles of the current embodiment.

The process 500 begins at step 502 and proceeds to step 504 which determines whether users are part of a given organization. If yes, the process 500 proceeds to step 510 which queries organization's active user profiles for skills and ratings. The process 500 then proceeds to step 520 which aggregates organization's active user profile's skills and ratings. The process 500 then proceeds to step 530 which updates organization's profile with skills aggregation and ratings aggregation information. The process 500 then proceeds to end at step 590. For example, when a user joins an organization, the skills and attributes from the user's user profile may be integrated into the organization's user profile. Alternatively, when the user leaves the organization, the user profile including the skills and attributes may leave the organization's user profile.

Step 504 determines whether users are part of the organization. If no, the process 500 proceeds to step 580 where there is no need to update organization's profile from user and skill ratings. The process 500 then proceeds to end at step 590.

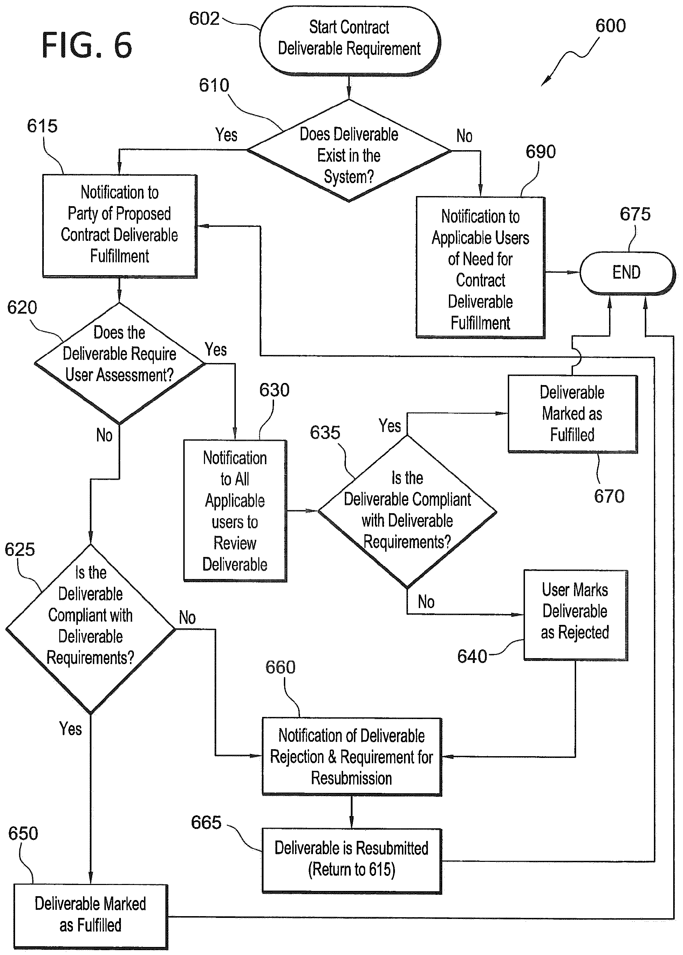

FIG. 6 illustrates a flow chart for the process 600 of deliverable management of the current embodiment.

The process 600 begins at step 602 and proceeds to step 610 to determine whether deliverable for a given contract exists in the system. If yes, the process 600 proceeds to step 615 which is sending notification to the party that has acquired services and contracted for the proposed contract deliverable fulfillment. If no, the process 600 proceeds to step 690 which is sending notification to applicable users of need for contract deliverable fulfillment. The process 600 proceeds from step 690 to end at step 675. For example, contract deliverable fulfillment may include ensuring that all aspects of the contract requirements are met in the deliverable and that it is acceptable to the acquirer of services.

The process 600 proceeds from step 615 to step 620 which determines whether the deliverable requires user assessment. If no, the process 600 proceeds to step 625 to determine whether the deliverable is compliant with deliverable requirements. If yes, the process 600 proceeds to step 650 which marks the deliverable as fulfilled. The process then proceeds to end at step 675. If no, the process 600 proceeds to step 660 which is sending a notification of deliverable rejection and requirement for resubmission. The process 600 then proceeds to step 665 which is where the deliverable is resubmitted and the process 600 returns to step 615 which is notification to the party that has acquired the services of the proposed contract deliverable fulfillment.

At step 620 where the process 600 determines that the deliverable does require user assessment, the process 600 proceeds to step 630 which notifies all applicable users to review the deliverable. The process 600 then proceeds to step 635 which determines whether the deliverable is complaint with deliverable requirements. If yes, the process 600 proceeds to step 670 which marks the deliverable as fulfilled. The process then proceeds to end at step 675. If no, the process 600 proceeds to step 640 which marks the deliverable as rejected and proceeds to step 660 which is sending notification of deliverable rejection and requirement for resubmission. The process then proceeds to step 665 which is where the deliverable is resubmitted and the process 600 returns to step 615 which is notification to the party that has acquired the services of the proposed contract deliverable fulfillment.

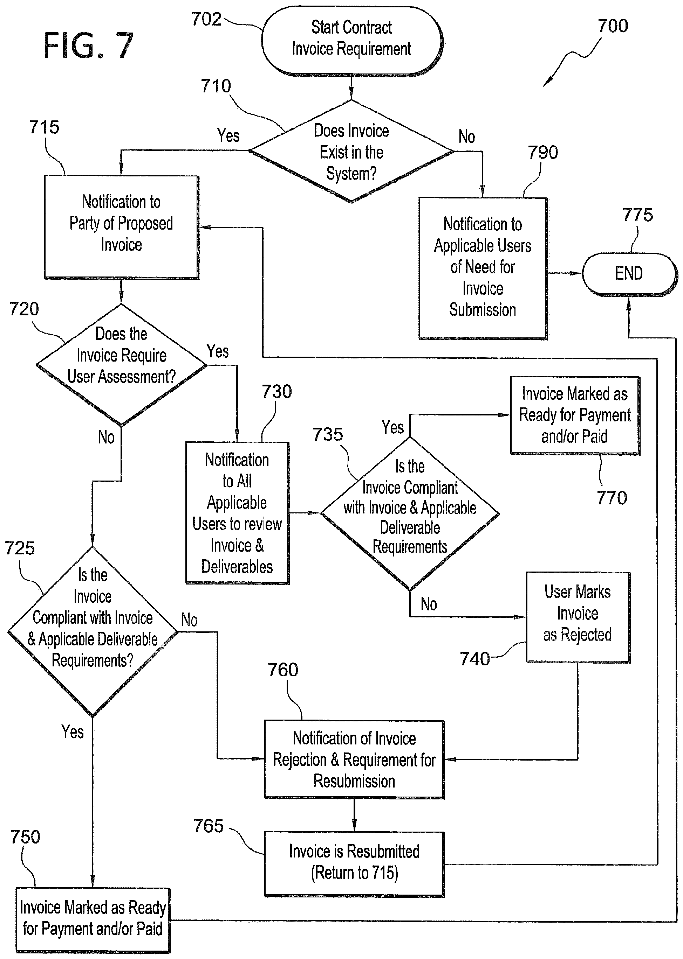

FIG. 7 illustrates a flow chart for the process 700 of invoice management of the current embodiment.

The process 700 begins at step 702 and proceeds to step 710 to determine whether an invoice exists in the system. If yes, the process 700 proceeds to step 715 which is sending notification to the party that acquired the services and with responsibilities to pay the invoice of the proposed invoice to pay. If no, the process 700 proceeds to step 790 which is sending notification to applicable users of need for invoice submission. The process 700 proceeds from step 790 to end at step 775. For example, invoice fulfillment may include ensuring that all aspects of the contract requirements are met in the invoice and that it is acceptable to the acquirer of services.

At step 720 where the process 700 determines that the invoice does not require user assessment, the process 700 proceeds to step 725 to determine whether the invoice is complaint with invoice and applicable deliverable requirements. If yes, the process 700 proceeds to step 750 which marks the invoice as ready for payment and/or paid. The process 700 then proceeds to end at step 775. If no, the process 700 proceeds to step 760 which is sending a notification of invoice rejection and requirement for resubmission. The process 700 then proceeds to step 765 which is where the invoice is resubmitted and the process 700 returns to step 715 which is sending notification to the party that has acquired services of proposed invoice.

At step 720 where the process 700 determines that the invoice requires user assessment, the process 700 proceeds to step 730 which notifies all applicable users to review the invoice and deliverable. The process 700 then proceeds to step 735 which determines whether the invoice is complaint with invoice and applicable deliverable requirements. If yes, the process 700 proceeds to step 770 which marks the invoice as ready for payment and/or paid. The process 700 then proceeds to end at step 775. If no, the process 700 proceeds to step 740 which marks the invoice as rejected and proceeds to step 760 which is notification of invoice rejection and requirement for resubmission. The process 700 then proceeds to step 765 which is where the invoice is resubmitted and the process 700 returns to step 715 which is notification to the party that has acquired the services of the proposed invoice.

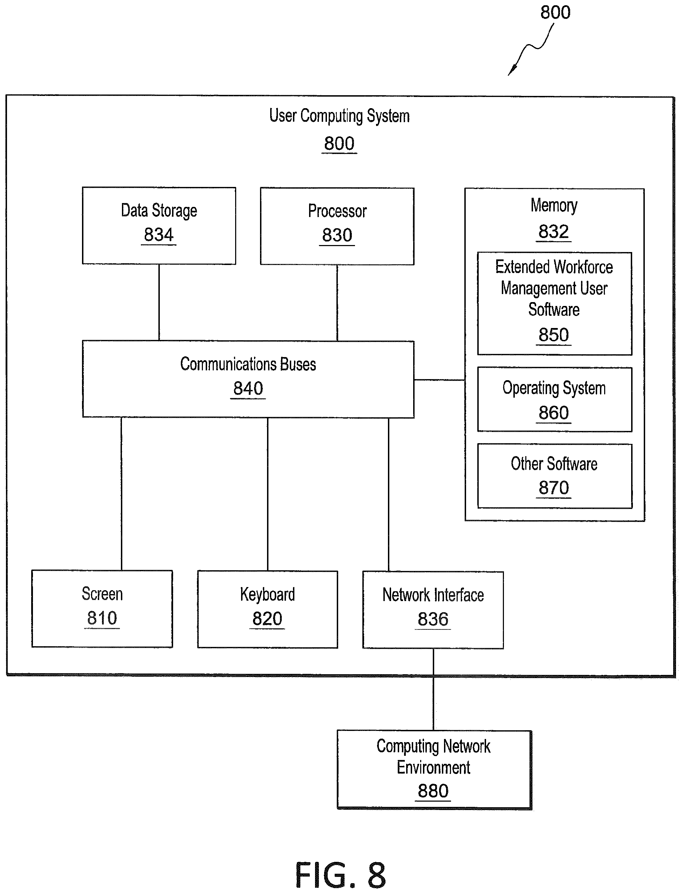

FIG. 8 illustrates a block diagram for a user computing system 800 of the current embodiment.

The user computing system 800 may include data storage 834, a processor 830, a screen 810, a keyboard 820, memory 832 and a network interface 836 connected through communication buses 840.

The memory 832 may include extended workforce management user software 850, an operating system 860 and other software 870.

The user computer system 800 may be connected to the computing network environment 880 through the network interface 836.

FIG. 8 illustrates an exemplary hardware diagram of a user computing system 800 for implementing a method for extended workforce management. As shown, the user computing system 800 includes a processor 830, memory 832, user interface through a screen 810 and a keyboard 820, network interface 836, and storage 834 interconnected via one or more communication buses 840. It will be understood that FIG. 8 constitutes, in some respects, an abstraction and that the actual organization of the components of the device 800 may be more complex than illustrated.

The processor 830 may be any hardware device capable of executing instructions stored in memory 832 or storage 834 or otherwise processing data. As such, the processor may include a microprocessor, field programmable gate array (FPGA), application-specific integrated circuit (ASIC), or other similar devices.

The memory 832 may include various memories such as, for example L1, L2, or L3 cache or system memory. As such, the memory 832 may include static random access memory (SRAM), dynamic RAM (DRAM), flash memory, read only memory (ROM), or other similar memory devices.

The user interface through a screen 810 and a keyboard 820 may include one or more devices for enabling communication with a user such as a provider of services, an acquirer of services and/or an administrator. For example, the user interface through a screen 810 and keyboard 820 may include a display, a mouse, and a keyboard for receiving user commands. In some embodiments, the user interface may include a command line interface or graphical user interface that may be presented to a remote terminal via the network interface 836.

The network interface 836 may include one or more devices for enabling communication with other hardware devices. For example, the network interface 836 may include a network interface card (NIC) configured to communicate according to the Ethernet protocol. Additionally, the network interface 836 may implement a TCP/IP stack for communication according to the TCP/IP protocols. Various alternative or additional hardware or configurations for the network interface 836 will be apparent.

The storage 834 may include one or more machine-readable storage media such as read-only memory (ROM), random-access memory (RAM), magnetic disk storage media, optical storage media, flash-memory devices, or similar storage media. In various embodiments, the storage 834 may store instructions for execution by the processor 830 or data upon with the processor 830 may operate. For example, the storage 834 may store a base operating system 860 for controlling various basic operations of the hardware 800 and instructions for extended workforce management user software 850.

It will be apparent that various information described as stored in the storage 834 may be additionally or alternatively stored in the memory 832. In this respect, the memory 832 may also be considered to constitute a "storage device" and the storage 823 may be considered a "memory." Various other arrangements will be apparent. Further, the memory 832 and storage 834 may both be considered "non-transitory machine-readable media." As used herein, the term "non-transitory" will be understood to exclude transitory signals but to include all forms of storage, including both volatile and non-volatile memories.

While the device 800 is shown as including one of each described component, the various components may be duplicated in various embodiments. For example, the processor 830 may include multiple microprocessors that are configured to independently execute the methods described herein or are configured to perform steps or subroutines of the methods described herein such that the multiple processors cooperate to achieve the functionality described herein. Further, where the device 800 is implemented in a cloud computing system, the various hardware components may belong to separate physical systems. For example, the processor 830 may include a first processor in a first server and a second processor in a second server.

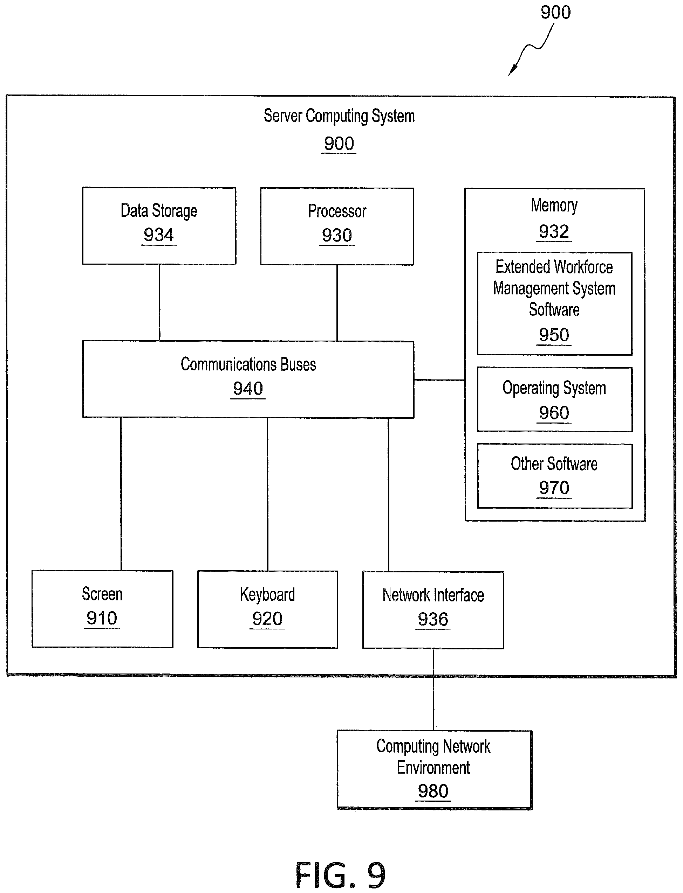

FIG. 9 illustrates a block diagram for a server computing system 900 of the current embodiment.

The server computing system 900 may include data storage 934, a processor 930, a screen 910, a keyboard 920, memory 932 and a network interface 936 connected through communication buses 940.

The memory 932 may include extended workforce management system software 950, an operating system 960 and other software 970.

The server computer system 900 may be connected to the computing network environment 980 through the network interface 936.

FIG. 9 illustrates an exemplary hardware diagram of a server computing system 900 for implementing a method for extended workforce management. As shown, the user computing system 900 includes a processor 930, memory 932, user interface through a screen 910 and a keyboard 920, network interface 936, and storage 934 interconnected via one or more communication buses 940. It will be understood that FIG. 9 constitutes, in some respects, an abstraction and that the actual organization of the components of the device 900 may be more complex than illustrated.

The processor 930 may be any hardware device capable of executing instructions stored in memory 932 or storage 934 or otherwise processing data. As such, the processor may include a microprocessor, field programmable gate array (FPGA), application-specific integrated circuit (ASIC), or other similar devices.

The memory 932 may include various memories such as, for example L1, L2, or L3 cache or system memory. As such, the memory 932 may include static random access memory (SRAM), dynamic RAM (DRAM), flash memory, read only memory (ROM), or other similar memory devices.

The user interface through a screen 910 and a keyboard 920 may include one or more devices for enabling communication with a user such as an administrator. For example, the user interface through a screen 910 and keyboard 920 may include a display, a mouse, and a keyboard for receiving user commands. In some embodiments, the user interface may include a command line interface or graphical user interface that may be presented to a remote terminal via the network interface 936.

The network interface 936 may include one or more devices for enabling communication with other hardware devices. For example, the network interface 936 may include a network interface card (NIC) configured to communicate according to the Ethernet protocol. Additionally, the network interface 936 may implement a TCP/IP stack for communication according to the TCP/IP protocols. Various alternative or additional hardware or configurations for the network interface 936 will be apparent.

The storage 934 may include one or more machine-readable storage media such as read-only memory (ROM), random-access memory (RAM), magnetic disk storage media, optical storage media, flash-memory devices, or similar storage media. In various embodiments, the storage 934 may store instructions for execution by the processor 930 or data upon with the processor 930 may operate. For example, the storage 934 may store a base operating system 960 for controlling various basic operations of the hardware 900 and instructions for extended workforce management user software 950.

It will be apparent that various information described as stored in the storage 934 may be additionally or alternatively stored in the memory 932. In this respect, the memory 932 may also be considered to constitute a "storage device" and the storage 923 may be considered a "memory." Various other arrangements will be apparent. Further, the memory 932 and storage 934 may both be considered "non-transitory machine-readable media." As used herein, the term "non-transitory" will be understood to exclude transitory signals but to include all forms of storage, including both volatile and non-volatile memories.

While the device 900 is shown as including one of each described component, the various components may be duplicated in various embodiments. For example, the processor 930 may include multiple microprocessors that are configured to independently execute the methods described herein or are configured to perform steps or subroutines of the methods described herein such that the multiple processors cooperate to achieve the functionality described herein. Further, where the device 900 is implemented in a cloud computing system, the various hardware components may belong to separate physical systems. For example, the processor 930 may include a first processor in a first server and a second processor in a second server.

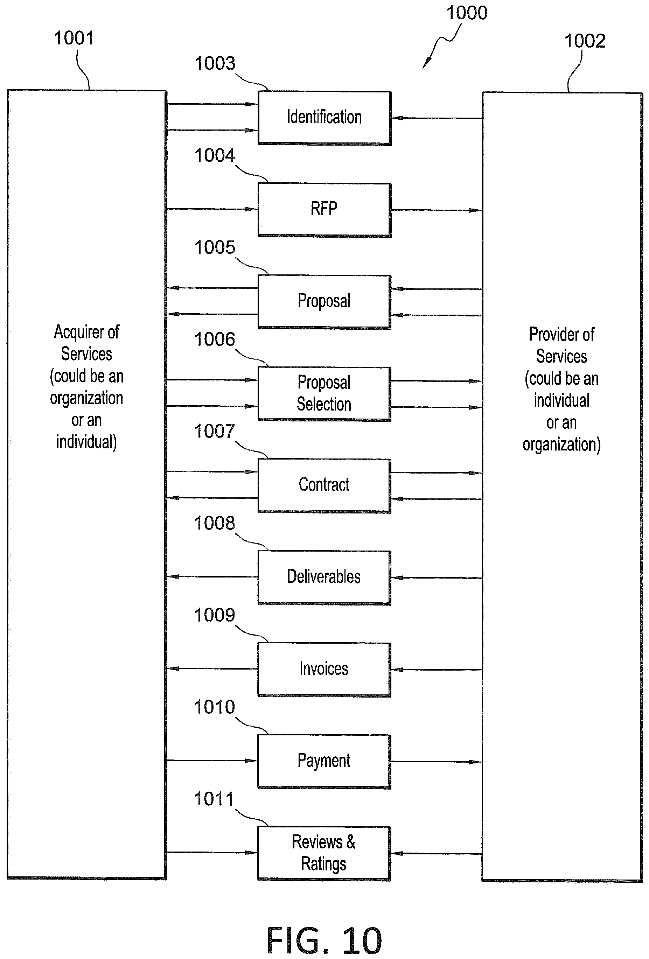

FIG. 10 illustrates a flow diagram 1000 for the steps of the extended workflow management system and process of the current embodiment.

The flow diagram 1000 including the steps of the extended workflow management system and process from the acquirer of services 1001, which may be an organization or an individual, to the provider of services 1002, which may be an organization or an individual. Operations, functionalities and means for enabling the process may be provided at, or managed by server apparatus, for example a server computing system 900 of Figure 9. Operations, functionalities and means enabling the process may also be partially or entirely distributed to be provided by computing apparatuses of acquirers of services and/or providers of services.

The flow diagram 1000 begins with identification 1003 which may include identifying the acquirer of services 1001 and the provider of services 1002, which may be initiated by either party.

The acquirer of services 1001 may send an RFP 1004 to the provider of services 1002. In response, the provider of services 1002 may send a proposal 1005 in response to the RFP 1004 to the acquirer of services 1001. The acquirer of services 1001 may select that proposal 1006 and the acquirer of services 1001 and the provider of services 1002 may create a contract 1007 based on that proposal 1005. In addition, the steps may begin sequentially from the provider of services 1002 sending a proposal 1005, without any RFP 1004, to the acquirer of services 1001. The acquirer of services 1001 may select that proposal 1006 and the acquirer of services 1001 and the provider of services 1002 may create a contract 1007 based on that proposal 1005. Moreover, the acquirer of services 1001 and the provider of services 1002 may create a contract 1007 without the RFP 1004, proposal 1005, or proposal selection 1006 steps.

The provider of services 1002 may then fulfill the contract 1007 and deliver deliverables 1008 to the acquirer of services 1001. The acquirer of services 1001 may then review the deliverables to ensure they fulfill the requirements. The provider of services 1002 may then send an invoice 1009 for the services to the acquirer of services 1001. The acquirer of services 1001 may review the invoice 1009 and if the invoice meets the requirements, send payment 1010 to the provider of services 1002. Both the acquirer of services 1001 and the provider of services 1002 may then provide rating and reviews 1011 for each other's work on the contract 1007.

In accordance with an aspect a method for extended workforce management includes identifying, by an acquirer of services, of a provider of service and forming a contract between the acquirer of services and the provider of service, wherein the acquirer of services and the provider of service are individuals, with a user profile, or organizations, which include a user or a plurality of users with user profiles and the user profiles for the user is associated with multiple organizations.

A user profile may include skills and ratings for a user. The user profile can be removed from an associated organizational profile when the user leaves the organization.

The method for extended workforce management may further include initiating a request from the acquirer of services, for a request for proposal ("RFP") to the provider of service. This may be provided by determining whether prior activity for the acquirer of services is available, determining whether the acquirer of services uses the prior activity for the RFP, allowing the acquirer of services to select which prior activity to use in the RFP, creating and reviewing, by the acquirer of services, the RFP and transmitting the RFP to the provider of service.

The method for extended workforce management may further include delivering, from the provider of services, a proposal, by determining whether prior activity for the provider of service is available, determining whether the provider of service uses the prior activity for the proposal, allowing the provider of service to select which prior activity to use for the proposal, creating and reviewing, by the provider of service, the proposal and transmitting the proposal to the acquirer of services.

The method for extended workforce management may further include initiating a request from the acquirer of services, for a request for proposal ("RFP") to the provider of service. This may be provided by determining whether prior activity for the acquirer of services is available, determining whether the acquirer of services uses the prior activity for the RFP, allowing the acquirer of services to select which prior activity to use in the RFP, and creating and reviewing, by the acquirer of services, the RFP and transmitting the RFP to the provider of service, and receiving from the provider of services, a proposal, by determining whether prior activity for the provider of service is available, determining whether the provider of service uses the prior activity for the proposal, allowing the provider of service to select which prior activity to use for the proposal and creating and reviewing, by the provider of service, the proposal and transmitting the proposal to the acquirer of services.

The method for extended workforce management may further include receiving a selection, from the acquirer of services, of a proposal from a plurality of proposals from the provider of service.

The method for extended workforce management may further include receiving a formation of the contract between the acquirer of services and the provider of service.

The method for extended workforce management may include receiving a formation of the contract between the acquirer of services and the provider of service. This may be provided by determining whether prior activity for the acquirer of service is available, determining whether the acquirer of service uses the prior activity for the contract, allowing the acquirer of service to select which prior activity to use in the contract, creating and reviewing, by the acquirer of service, the contract and transmitting the contract to of the provider of service.

The method for extended workforce management may include receiving a formation of the contract between the acquirer of services and the provider of service. This may be provided by determining whether prior activity for the provider of service is available, determining whether the provider of service uses the prior activity for the contract, allowing the provider of service to select which prior activity to use in the contract, creating and reviewing, by the provider of service, the contract and transmitting the contract to the acquirer of services.

The method for extended workforce management may include receiving a determination from the acquirer of services, of whether a deliverable meets the requirements of the contract. This may be provided by determining whether the deliverable is available and notifying the acquirer of services that the deliverable is available, determining whether the deliverable requires a user assessment and notifying the users to review the deliverable, determining whether the deliverable meets the requirements of the contract and marking the deliverable as fulfilled.

The method for extended workforce management may include receiving a determination of whether the deliverable meets the requirements of the contract, rejecting the deliverable and requiring resubmission of the deliverable.

The method for extended workforce management may include receiving a determination from the acquirer of services, of whether a deliverable meets the requirements of the contract. This may be provided by determining whether the deliverable is available and notifying the acquirer of services that the deliverable is available, determining whether the deliverable requires a user assessment and notifying the users to review the deliverable, determining whether the deliverable meets the requirements of the contract and marking the deliverable as fulfilled.

The method for extended workforce management may include receiving a determination of whether the deliverable meets the requirements of the contract, rejecting the deliverable and requiring resubmission of the deliverable.

The method for extended workforce management may include receiving a determination from the acquirer of services, of whether an invoice meets the requirements of the contract. This may be provided by determining whether the invoice is available and notifying the acquirer of services that the invoice is available, determining whether the invoice requires a user assessment and notifying the users to review the invoice, determining whether the invoice meets the requirements of the contract and marking the invoice as ready for payment.

The method for extended workforce management may include receiving a determination of whether the invoice meets the requirements of the contract, rejecting the invoice and requiring resubmission of the invoice.

The method for extended workforce management may include transmitting, by the acquirer of services, payment for the invoice to the provider of services.

The method for extended workforce management may include receiving a determination from the acquirer of services, of whether an invoice meets the requirements of the contract. This may be provided by determining whether the invoice is available and notifying the acquirer of services that the invoice is available, determining whether the invoice requires a user assessment and notifying the users to review the invoice, determining whether the invoice meets the requirements of the contract and marking the invoice as ready for payment. The method may further include receiving a determination of whether the invoice meets the requirements of the contract, rejecting the invoice and requiring resubmission of the invoice. The method may yet further include transmitting, by the acquirer of services, payment for the invoice to the provider of services.

The method for extended workforce management may include determining whether collaborative project ratings for the contract exist for the acquirer of services and the provider of service, querying and assessing the collaborative project ratings for the contract and integrating the collaborative project ratings into the user profiles for the acquirer of services and the provider of service.

The method for extended workforce management may include determining whether past contract activities exist for the acquirer of services and the provider of service, querying and assessing the past contract activities for being on-time, on-budget and on-point for the deliverable and integrating the past contract activities into the user profiles for the acquirer of services and the provider of service.

According to an aspect there is provided an apparatus for extended workforce management, the apparatus including a memory and a processor configured to identify, by an acquirer of services, a provider of service and form a contract between the acquirer of services and the provider of service, wherein the acquirer of services and the provider of service are individuals, with a user profile, or organizations which include a user or a plurality of users with user profiles and the user profiles of a user is associated with multiple organizations.

The apparatus can be configured to process a user profile that includes skills and ratings for a user. The apparatus may be configured to remove the user profile from an associated organizational profile when the user leaves the organization.

The processor can be configured to initiate a request from the acquirer of services, for a request for proposal ("RFP") to the provider of service. The may be provided by configuring the processor for determining whether prior activity for the acquirer of services is available, determining whether the acquirer of services uses the prior activity for the RFP, allowing the acquirer of services to select which prior activity to use in the RFP, creating and reviewing, by the acquirer of services, the RFP and transmit the RFP to the provider of service.

The processor may be configured to deliver from the provider of services, a proposal, by determining whether prior activity for the provider of service is available, determining whether the provider of service uses the prior activity for the proposal, allowing the provider of service to select which prior activity to use for the proposal, creating and reviewing, by the provider of service, the proposal and transmitting the proposal to the acquirer of services.

The processor may be configured to receive a selection, from the acquirer of services, of a proposal from a plurality of proposals from the provider of service.

The processor may be configured to receive a formation for the contract between the acquirer of services and the provider of service. The processor may be configured to provide this by determining whether prior activity for the acquirer of service is available, determining whether the acquirer of service uses the prior activity for the contract, allowing the acquirer of service to select which prior activity to use in the contract, creating and reviewing, by the acquirer of service, the contract and transmitting the contract to the provider of service.

The processor may also be configured to receive a formation for the contract between the acquirer of services and the provider of service, by determining whether prior activity for the provider of service is available, determining whether the provider of service uses the prior activity for the contract, allowing the provider of service to select which prior activity to use in the contract, creating and reviewing, by the provider of service, the contract and transmitting the contract to the acquirer of services.

The processor may be configured to receive a determination from the acquirer of services, of whether a deliverable meets the requirements of the contract. This may be provided by determining whether the deliverable is available and notifying the acquirer of services that the deliverable is available, determining whether the deliverable requires a user assessment and notifying the users to review the deliverable, determining whether the deliverable meets the requirements of the contract and marking the deliverable as fulfilled.

The processor may be configured to receive a determination of whether the deliverable meets the requirements of the contract, rejecting the deliverable and requiring resubmission of the deliverable.

The processor may be configured to receive a determination from the acquirer of services, of whether a deliverable meets the requirements of the contract. This may be provided by determining whether the deliverable is available and notifying the acquirer of services that the deliverable is available, determining whether the deliverable requires a user assessment and notifying the users to review the deliverable, determining whether the deliverable meets the requirements of the contract and marking the deliverable as fulfilled.

The processor may be configured to receive a determination of whether the deliverable meets the requirements of the contract, rejecting the deliverable and requiring resubmission of the deliverable.

The processor may be configured to receive a determination from the acquirer of services, of whether an invoice meets the requirements of the contract, by determining whether the invoice is available and notifying the acquirer of services that the invoice is available, determining whether the invoice requires a user assessment and notifying the users to review the invoice, determining whether the invoice meets the requirements of the contract and marking the invoice as ready for payment.

The processor may be configured to receive a determination of whether the invoice meets the requirements of the contract, rejecting the invoice and requiring resubmission of the invoice.

The processor may be configured to transmit, by the acquirer of services, payment for the invoice to the provider of services.

The processor may be configured to receive a determination from the acquirer of services, of whether an invoice meets the requirements of the contract This may be provided by determining whether the invoice is available and notifying the acquirer of services that the invoice is available, determining whether the invoice requires a user assessment and notifying the users to review the invoice, determining whether the invoice meets the requirements of the contract and marking the invoice as ready for payment.

The processor may be configured to receive a determination of whether the invoice meets the requirements of the contract, rejecting the invoice and requiring resubmission of the invoice.

The processor may be configured to transmit, by the acquirer of services, payment for the invoice to the provider of services.

The he processor may be configured to determine whether collaborative project ratings for the contract exist for the acquirer of services and of the provider of service, query and assess the collaborative project ratings for the contract and integrate the collaborative project ratings into the user profiles for the acquirer of services and the provider of service.

The processor may be configured to determine whether past contract activities exist for the acquirer of services and the provider of service, query and assess the past contract activities for being on-time, on-budget and on-point for the deliverable; and integrate the past contract activities into the user profiles for the acquirer of services and the provider of service.

It should be apparent from the foregoing description that various exemplary embodiments of the invention may be implemented in hardware. Furthermore, various exemplary embodiments may be implemented as instructions stored on a non-transitory machine-readable storage medium, such as a volatile or non-volatile memory, which may be read and executed by at least one processor to perform the operations described in detail herein. A non-transitory machine-readable storage medium may include any mechanism for storing information in a form readable by a machine, such as a personal or laptop computer, a server, or other computing device. Thus, a non-transitory machine-readable storage medium may include read-only memory (ROM), random-access memory (RAM), magnetic disk storage media, optical storage media, flash-memory devices, and similar storage media and excludes transitory signals. In the above a processor and a memory can be provided by processor means and memory means comprising one or more processing and storage entities.

It should be appreciated by those skilled in the art that any blocks and block diagrams herein represent conceptual views of illustrative circuitry embodying the principles of the invention. Implementation of particular blocks can vary while they can be implemented in the hardware or software domain without limiting the scope of the invention. Similarly, it will be appreciated that any flow charts, flow diagrams, state transition diagrams, pseudo code, and the like represent various processes which may be substantially represented in machine readable media and so executed by a computer or processor, whether or not such computer or processor is explicitly shown.

Accordingly, it is to be understood that the above description is intended to be illustrative and not restrictive. Many embodiments and applications other than the examples provided would be apparent upon reading the above description. The scope should be determined, not with reference to the above description or Abstract below, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood that the application is capable of modification and variation.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1. A method for extended workforce management, the method comprising the steps of:
identifying, by data processing means associated with a provider of services, of an acquirer of services;
forming by the data processing means a contract between the provider of services and the acquirer of services; wherein
the acquirer of services and the provider of service are individuals, with a user profile, or organizations which include a plurality of users with user profiles, the user profile or user profiles being stored in storage means; and
the user profile for the user is associated with multiple organizations.

2. The method for extended workforce management of claim 1, wherein a user profile includes information of skills and ratings for a user and the user profile is removed from an associated organizational profile when the user leaves the organization.

3. The method for extended workforce management of claim 1 or 2, the method further comprising the steps of:
receiving from the provider of service, a proposal, by:
determining whether information of prior activity for the provider of service is available;
determining whether the provider of service uses the information of prior activity for the proposal;
allowing the provider of service to select which information of prior activity to use in the proposal;
creating and reviewing, by the provider of service, the proposal and transmitting the proposal to the acquirer of services.

4. The method for extended workforce management of any preceding claim, the method further comprising the step of:
receiving a selection from the acquirer of services, of a proposal.

5. The method for extended workforce management of at least one of claims 1, 2, 3 and 4, the method further comprising the steps of:
receiving a formation of the contract between the acquirer of services and the provider of service.

6. The method for extended workforce management of claim 5, the method further comprising the steps of:
receiving a formation of the contract between the acquirer of services and of the provider of service, by:
determining whether information of prior activity for the acquirer of service is available;
determining whether the acquirer of service uses the information of prior activity for the contract;
allowing the acquirer of service to select which information of prior activity to use in the contract;
creating and reviewing, by the acquirer of service, the contract and transmitting the contract to the provider of service.

7. The method for extended workforce management of claim 5 or 6, the method further comprising the steps of:
receiving a formation of the contract between the acquirer of services and of the provider of service, by:
determining whether information of prior activity for the provider of service is available;
determining whether the provider of service uses the information of prior activity for the contract;
allowing the provider of service to select which information of prior activity to use in the contract;
creating and reviewing, by the provider of service, the contract and transmitting the contract to the acquirer of services.

8. The method for extended workforce management of at least one of claims 5 to 7 the method further comprising the steps of:
receiving a determination from the acquirer of services, of whether a deliverable meets the requirements of the contract.

9. The method for extended workforce management of claim 8, the method further comprising the steps of:
receiving a determination from the acquirer of services, of whether a deliverable meets the requirements of the contract, by:
determining whether the deliverable is available and notifying the acquirer of services that the deliverable is available;
determining whether the deliverable requires a user assessment and notifying the users to review the deliverable;
determining whether the deliverable meets the requirements of the contract and marking the deliverable as fulfilled.

10. The method for extended workforce management of claim 8, the method further comprising the steps of:
receiving a determination from the acquirer of services, of whether a deliverable meets the requirements of the contract, by:
receiving a determination of whether the deliverable meets the requirements of the contract, rejecting the deliverable and requiring resubmission of the deliverable.

11. The method for extended workforce management of at least one of the claims 5 to 10, the method further comprising the steps of:
receiving a determination from the acquirer of services, of whether an invoice meets the requirements of the contract, by:
determining whether the invoice is available and notifying the acquirer of services that the invoice is available;
determining whether the invoice requires a user assessment and notifying the users to review the invoice;
determining whether the invoice meets the requirements of the contract and marking the invoice as ready for payment.

12. The method for extended workforce management of at least one of claims 5 to 11, the method further comprising the steps of:
receiving a determination of whether the invoice meets the requirements of the contract, rejecting the invoice and requiring resubmission of the invoice.

13. The method for extended workforce management of claim 12, the method further comprising the steps of:
transmitting, by the acquirer of services, payment for the invoice to the provider of services.

14. The method for extended workforce management of any preceding claim, the method further comprising the steps of:
determining whether collaborative project ratings for the contract exist for the acquirer of services and the provider of service;
querying and assessing the collaborative project ratings for the contract; and
integrating the collaborative project ratings into the user profiles for the acquirer of services and the provider of service.

15. The method for extended workforce management of claim 14, the method further comprising the steps of:
determining whether information of past contract activities exist for the acquirer of services and the provider of service;
querying and assessing the past contract activities for being on-time, on-budget and on-point for the deliverable based on the determined information; and
integrating the information of past contract activities into the user profiles for the acquirer of services and the provider of service.

16. An apparatus for extended workforce management, the apparatus comprising:
memory means; and
processor means configured to:
enable sending, by a provider of services, a proposal to an acquirer of services;
enable selection, by the acquirer of services, of the proposal;
form a contract between the provider of services and the acquirer of services based on the proposal; wherein
the acquirer of services and the provider of service are individuals, with a user profile, or organizations, which include a user or a plurality of users with user profiles, the user profile or user profiles being stored in the memory means; and
the user profile of the user is associated with multiple organizations.

17. The apparatus for extended workforce management of claim 16, wherein a user profile includes information of skills and ratings for a user and the user profile is removed from an associated organizational profile when the user leaves the organization.

18. The apparatus for extended workforce management of claim 16 or 17, the processor means further configured to :
receive from the provider of service, a proposal, by:
determining whether information of prior activity for the provider of service is available;
determining whether the provider of service uses the information of prior activity for the proposal;
allowing the provider of service to select which information of prior activity to use in the proposal;
creating and reviewing, by the provider of service, the proposal and transmitting the proposal to the acquirer of services.

19. The apparatus for extended workforce management of any of claims 16 to 18, the processor means further configured to receive a selection from the acquirer of services, of a proposal.

20. The apparatus for extended workforce management of at least one of claims 16, 17, 18 and 19, the processor means further configured to receive a formation of the contract between the acquirer of services and the provider of service

21. The apparatus for extended workforce management of claim 20, the processor means further configured to receive a formation of the contract between the acquirer of services and the provider of service, by:
determining whether information of prior activity for the acquirer of service is available;
determining whether the acquirer of service uses the information of prior activity for the contract;
allowing the acquirer of service to select which information of prior activity to use in the contract;
creating and reviewing, by the acquirer of service, the contract and transmitting the contract to the provider of services.

22. The apparatus for extended workforce management of claim 20 or 21, the processor means further configured to receive a formation of the contract between the acquirer of services and the provider of service, by:
determining whether information of prior activity for the provider of service is available;
determining whether the provider of service uses the information of prior activity for the contract;
allowing the provider of service to select which information of prior activity to use in the contract;
creating and reviewing, by the provider of service, the contract and transmitting the contract to the acquirer of services.

23. The apparatus for extended workforce management of at least one of the claims 16 to 22, the processor means further configured to receive a determination from the acquirer of services, of whether a deliverable meets the requirements of the contract, by:
determining whether the deliverable is available and notifying the acquirer of services that the deliverable is available;
determining whether the deliverable requires a user assessment and notifying the users to review the deliverable;
determining whether the deliverable meets the requirements of the contract and marking the deliverable as fulfilled.

24. The apparatus for extended workforce management of claim 23, the processor means further configured to receive a determination of whether the deliverable meets the requirements of the contract, rejecting the deliverable and requiring resubmission of the deliverable.

25. The apparatus for extended workforce management of claim 24, the processor means further configured to receive a determination from the acquirer of services, of whether an invoice meets the requirements of the contract, by:
determining whether the invoice is available and notifying the acquirer of services that the invoice is available;
determining whether the invoice requires a user assessment and notifying the users to review the invoice;
determining whether the invoice meets the requirements of the contract and marking the invoice as ready for payment.

26. The apparatus for extended workforce management of claim 25, the processor means further configured to receive a determination of whether the invoice meets the requirements of the contract, rejecting the invoice and requiring resubmission of the invoice.

27. The apparatus for extended workforce management of claim 26, the processor further configured to:
transmit, by the acquirer of services, payment for the invoice to the provider of services.

28. The apparatus for extended workforce management of any of claims 16 to 27, the processor means further configured to:
determine whether collaborative project ratings for the contract exist for the acquirer of services and the provider of service;
query and assessing the collaborative project ratings for the contract; and
integrate the collaborative project ratings into the user profiles for the acquirer of services and the provider of service.

29. The apparatus for extended workforce management of claim 28, the processor means further configured to:
determine whether information of past contract activities exist for the acquirer of services and the provider of service;
query and assess, based on the determined information, the past contract activities for being on-time, on-budget and on-point for the deliverable; and
integrate information of the past contract activities into the user profiles for the acquirer of services and the provider of service.
